## Europäisches Patentamt

## European Patent Office

## Office européen des brevets

(19)

(11) Veröffentlichungsnummer: **0 200 844**
**B1**

(12) **EUROPÄISCHE PATENTSCHRIFT**

(45) Veröffentlichungstag der Patentschrift:
18.05.88

(51) Int. Cl.⁴: **B 25 D 16/00,** F 16 H 37/14

(21) Anmeldenummer: 85810592.7

(22) Anmeldetag: 12.12.85

(54) Bohrhammer.

(30) Priorität: 06.05.85 DE 3516494

(43) Veröffentlichungstag der Anmeldung:
12.11.86 Patentblatt 86/46

(45) Bekanntmachung des Hinweises auf die Patenterteilung:
18.05.88 Patentblatt 88/20

(84) Benannte Vertragsstaaten:
AT BE CH DE FR GB IT LI NL SE

(56) Entgegenhaltungen:
EP-A-0 021 881
DE-A-3 142 740
FR-A-2 146 732
US-A-2 792 723

(73) Patentinhaber: HILTI Aktiengesellschaft, FL- 9494 Schaan (LI)

(72) Erfinder: Neumaier, Anton, Senserbergstrasse 51 b, D-8080 Fürstenfeldbruck (DE)
Erfinder: Hoereth, Hans- Jürgen, Freisingerstrasse 10c, D-8051 Langenbach (DE)

(74) Vertreter: Wildi, Roland, Hilti Aktiengesellschaft Patentabteilung, FL- 9494 Schaan (LI)

EP 0 200 844 B1

## Beschreibung

Die Erfindung betrifft einen Bohrhammer, bei welchem mittels eines Schlagwerkes und einer Drehantriebseinrichtung einem Werkzeug wahlweise Drehung, Schläge oder Drehung und Schläge erteilt werden, mit zwei unabhängig voneinander steuerbaren Antriebsmotoren, von denen der erste mit dem Schlagwerk und der zweite mit der Drehantriebseinrichtung gekuppelt ist.

Zur Erzielung hoher Abbauleistung und langer Lebensdauer eines Bohrhammers der vorgenannten Art samt Werkzeug ist eine individuelle Steuerbarkeit der Drehzahl, Schlagzahl und Schlagstärke erforderlich. Dieser Bedarf ergibt sich sowohl aus den unterschiedlichen Dimensionen der Werkzeuge als auch aus den unterschiedlichen zu bearbeitenden Untergründen.

Ein bekannter Bohrhammer (DE-A-3 142 740) verfügt zu diesem Zwecke über zwei voneinander unabhängig steuerbare Antriebsmotoren, deren erster ein Schlagwerk und deren zweiter eine Drehantriebseinrichtung betätigt.

Um zu gewährleisten, dass der Bohrhammer in jeder Betriebsart die erforderliche Leistung zu erbringen vermag, ist jeder Antriebsmotor für die in der jeweiligen Betriebsart maximale Leistung ausgelegt, was relativ grosse Motoren bedingt.

Der Erfindung liegt die Aufgabe zugrunde, einen Bohrhammer mit zwei Antriebsmotoren für ein Schlagwerk und eine Drehantriebseinrichtung zu schaffen, wobei Schlagwerk und Drehantriebseinrichtung individuell steuerbar sind und die Antriebsmotoren sich durch eine vergleichsweise kleine Dimensionierung auszeichnen.

Erfindungsgemäss wird die Aufgabe dadurch gelöst, dass zwischen der den ersten Antriebsmotor mit dem Schlagwerk verbindenden Antriebskette und der den zweiten Antriebsmotor mit der Drehantriebseinrichtung verbindenden Antriebskette eine einen Kraftfluss von der einen zur anderen Antriebskette erlaubende Kupplungseinrichtung vorgesehen ist.

Die Kupplungseinrichtung ist zweckmässig ein Getriebeteil, das die Antriebsketten der Antriebsmotoren miteinander mechanisch verbindet. Durch den so möglichen Kraftfluss zwischen den Antriebsketten können sich die Antriebsmotoren gegenseitig unterstützen. Beispielsweise speist der erste, mit dem Schlagwerk gekuppelte Antriebsmotor bei erhöhtem Kraftbedarf die Drehantriebseinrichtung. Durch den Betrieb der beiden Motoren mit verschiedenen Drehzahlen lassen sich dieserart die Drehzahl, Schlagzahl und Schlagstärke beliebig ansteuern, wobei die Motoren dank deren Zusammenschaltung zur gegenseitigen Unterstützung vergleichsweise klein und unterschiedlich stark dimensioniert sein können.

Mit Vorteil ist die Kupplungseinrichtung als Umlaufgetriebe ausgebildet. Das Umlaufgetriebe verfügt über vorzugsweise zwei Planetenräder, die einerseits mit einer Abtriebswelle des ersten Motors und andererseits mit einem konzentrisch zur Abtriebswelle drehbaren Zahnkranz kämmen. Die Planetenräder sind mit deren Achse in einem wiederum zur Abtriebswelle des ersten Motors drehgelagerten Träger um die eigene Achse drehbar. Auf die Planetenräder wirkt wahlweise die Antriebskraft des ersten, des zweiten oder beider Antriebsmotoren ein. In der letztgenannten Betriebsart betätigen die Antriebsmotoren über das Umlaufgetriebe das Schlagwerk und die Drehantriebseinrichtung, wobei dank der durch das Umlaufgetriebe geschaffenen Kupplungsverbindung zwischen den von den beiden Antriebsmotoren ausgehenden Antriebsketten ein Kraftfluss zur gegenseitigen Unterstützung der Motoren auftritt. Der primär für die Drehantriebseinrichtung vorgesehene zweite Antriebsmotor kann erheblich kleiner als der erste Antriebsmotor dimensioniert sein, dh beispielsweise etwa 30 % des Leistungsvermögens des ersten Motors besitzen.

Vorzugsweise ist die Kupplungseinrichtung als Freilaufkupplung ausgebildet. Es kann sich dabei um eine Freilaufkupplung herkömmlicher Bauart handeln. Solche Freilaufkupplungen bestehen aus zwei Kupplungshälften - einem antreibenden und einem abtreibenden Teil - zwischen denen Kupplungsglieder angeordnet sind. Durch die relative Drehrichtung der beiden Kupplungshälften wird die Freilaufkupplung geschaltet, dh in der einen Bewegungsrichtung erfolgt eine Mitnahme, in der anderen Freilauf. Als Kupplungsglieder eignen sich beispielsweise Klemmrollen. Eine Kupplungseinrichtung in Form einer Freilaufkupplung zeichnet sich im besonderen durch Einfachheit des Aufbaues der Kupplung als auch des Einbaus der Kupplung zwischen die Antriebsketten aus.

Nach einem weiteren Vorschlag der Erfindung sitzt die Freilaufkupplung auf einer Abtriebswelle der mit dem ersten Antriebsmotor verbundenen Antriebskette. Der für das Schlagwerk vorgesehene erste Antriebsmotor ist vom Schlagwerk relativ gleichmässig belastet, während der für die Drehantriebseinrichtung vorgesehene zweite Antriebsmotor während des Bohrvorganges einem sich fortwährend ändernden Kraftbedarf unterliegt. Der sich ändernde Kraftbedarf der Drehantriebseinrichtung ergibt sich aus den während des Bohrvorganges ändernden Reibungsverhältnissen des Werkzeugs im Bohrloch und aus den unterschiedlichen Materialverhältnissen des Untergrundes.

In Weiterbildung der Erfindung weist die Freilaufkupplung ein Kupplungszahnrad auf, das mit einem Zwischenzahnrad in der Antriebskette zwischen dem zweiten Antriebsmotor und der Drehantriebseinrichtung kämmt. Der so erzielbare Kraftfluss bewirkt, dass die Abtriebswelle des ersten Antriebsmotors vom Kupplungszahnrad überholt werden kann, so dass die Drehzahl für das Werkzeug mit Hilfe des zweiten Antriebsmotors über die mit dem ersten Antriebsmotor hinaus erzielbare Drehzahl erhöht wird. Bei durch allenfalls erhöhten Drehmomentbedarf für die Drehung des Werkzeugs auftretendem Abfall der Drehzahl des zweiten Antriebsmotors schaltet sich der erste Antriebsmotor über die Freilaufkupplung zur Unterstützung des Drehantriebs selbsttätig zu.

Zweckmässig verläuft die Freilauf-Drehrichtung des Kupplungszahnrades gegensinnig zur Antriebsdrehrichtung des Zwischenrades. Bei dieser Anordnung läuft der den Drehantrieb des Werkzeugs bewerkstelligende zweite Antriebsmotor stets in die eine für das Bohrwerkzeug ideale Drehrichtung. Dies trifft sowohl bei nur drehendem Betrieb des Werkzeugs als auch bei drehendem und schlagendem Betrieb des Werkzeugs zu. Die nur Schläge an das Werkzeug abgebende Betriebsart wird auf einfache Weise erreicht, indem gegenüber den anderen Betriebsarten die Drehrichtung des ersten Antriebsmotors umgekehrt wird. Die Freilaufkupplung nimmt dabei Freilauf-Stellung ein.

In der nur Drehung an das Werkzeug abgebenden Betriebsart kann es Anwendungsfälle (zB Bohren in Holz) geben, bei denen ein besonders grosses Drehmoment und eine höhere als beispielsweise bei Betonbearbeitung erforderliche Werkzeugdrehzahl benötigt wird. Für diesen Fall ist zweckmässig eine Abschaltung für das Schlagwerk in der zum Schlagwerk führenden Antriebskette vorgesehen. Bei abgeschaltetem Schlagwerk ist es möglich, den ersten Antriebsmotor auf seine maximale Drehzahl hochzufahren. Beide Antriebsmotoren wirken dann zusammen auf die Drehantriebseinrichtung.

Für Anwendungsfälle mit nur kleinem Drehmomentbedarf am Werkzeug besteht die Möglichkeit, nur den zweiten Antriebsmotor als Antrieb zu benützen und den ersten Antriebsmotor stillzusetzen.

Die Erfindung wird nachstehend anhand von Zeichnungen, die Ausführungsbeispiele wiedergeben, näher erläutert. Es zeigen:

Fig. 1 einen Bohrhammer mit als Freilaufkupplung ausgebildeter Kupplungseinrichtung, teilweise im Längsschnitt;

Fig. 2 in vereinfachter Darstellung die für den Antrieb wesentlichen Teile einer weiteren Ausführungsform eines Bohrhammers, mit als Umlaufgetriebe ausgebildeter Kupplungseinrichtung.

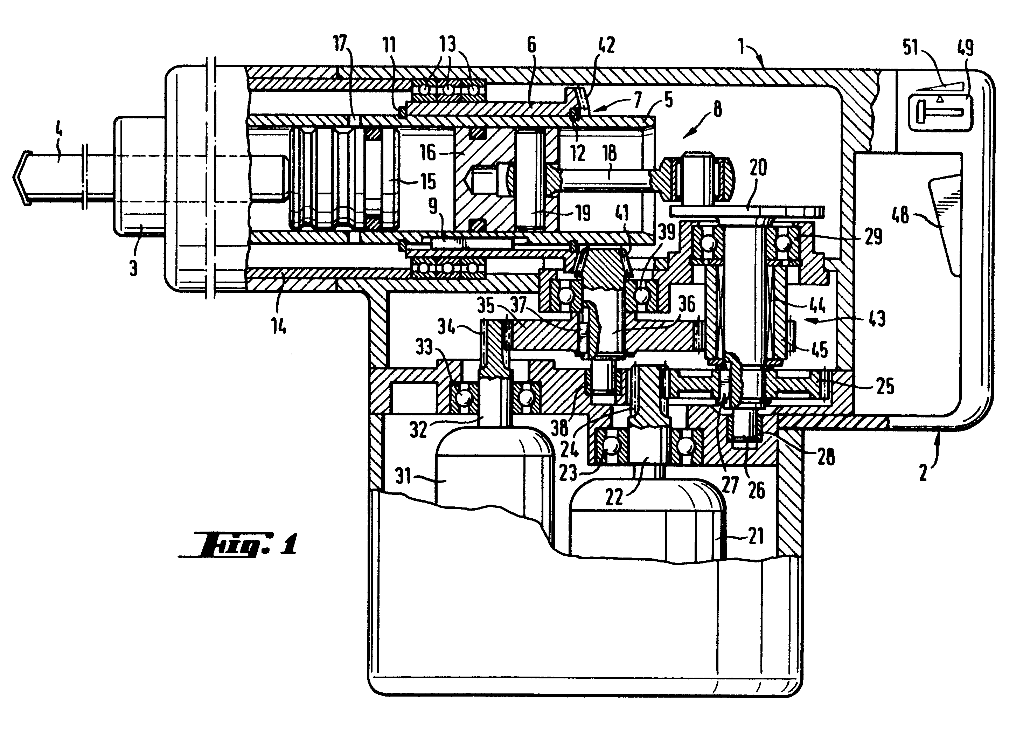

Der Bohrhammer nach Fig. 1 weist ein insgesamt mit 1 bezeichnetes Gehäuse mit einem insgesamt mit 2 bezeichneten Handgriff auf. Der Bohrhammer vermag einem in einem Werkzeughalter 3 gefassten Werkzeug 4 wahlweise Drehung, Schläge oder Drehung und Schläge zu vermitteln.

Die Drehung wird über an sich bekannte und deshalb nicht näher dargestellte Mitnehmerorgane im Werkzeughalter 3 an das Werkzeug 4 übertragen. Der Werkzeughalter 3 steht mit einem in Drehung versetzbaren Führungszylinder 5 in Verbindung. Auf dem Führungszylinder 5 sitzt drehfest ein Hohlrad 6 mit Kegelverzahnung, das zusammen mit dem Führungszylinder und dem Werkzeughalter 3 eine insgesamt mit 7 bezeichnete Drehantriebseinrichtung darstellt. Zur Vermittlung von Schlägen ragt das Werkzeug 4 mit dem hinteren Ende in den Führungszylinder 5 und damit in den Wirkbereich eines insgesamt mit 8 bezeichneten Schlagwerks.

Die drehfeste Verbindung des Hohlrades 6 auf dem Führungszylinder 5 wird durch eine in Längsnuten beider Teile einragende Feder 9 gewährleistet. Sicherungsringe 11, 12 legen das Hohlrad 6 auf dem Führufungszylinder 5 unverschieblich fest. Über ein Wälzlager 13 ist das Hohlrad 6 und damit auch der Führungszylinder 5 im Gehäuse 1 drehgelagert. Eine Büchse 14 stützt das Wälzlager 13 nach vorne ab. Das Schlagwerk 8 besitzt einen Schlagkolben 15 und einen Treibkolben 16, die beide dichtend im Führungszylinder 5 verschieblich gelagert sind. In dem zwischen den beiden Kolben gebildeten Raum im Führungszylinder 5 befindet sich Luft, die bei hin- und hergehender Bewegung des Treibkolbens 16 zufolge der Massenträgheit des Schlagkolbens 15 abwechselnd komprimiert und dekomprimiert wird. Der Druckwechsel dieser Luft bewirkt ebenso eine Hin- und Herbewegung des Schlagkolbens 15, dessen Vorwärtshub stets durch Aufschlagen am Werkzeug 4 gestoppt wird. Bohrungen 17 im Führungszylinder 5 ermöglichen ein Stillsetzen des Schlagkolbens 15, wenn dieser bei entnommenem Werkzeug 4 im Führungszylinder 5 weiter nach vorne gelangt. Die Hubbewegung des Treibkolbens 16 wird durch ein Pleuel 18 erzeugt, das mit einem Ende über einen Querbolzen 19 am Treibkolben 16 angelenkt ist und mit dem zweiten Ende in Antriebsverbindung mit einer Kurbel 20 steht.

Mit dem Schlagwerk 8 ist ein andeutungsweise erkennbarer erster Antriebsmotor 21 verbunden. Dessen Rotorwelle 22 ist gehäuseseitig über ein Wälzlager 23 geführt und trägt im Endbereich eine Verzahnung 24. Die Antriebskette zwischen dem Antriebsmotor 21 und dem Schlagwerk 8 weist ein mit der Verzahnung 24 kämmendes Zahnrad 25 auf, das drehfest auf einer Abtriebswelle 26 sitzt, die ihrerseits fest mit der Kurbel 20 verbunden ist. Eine Feder 27 bewerkstelligt die Drehfixierung des Zahnrades 25 auf der Abtriebswelle 26. Letztere ist über ein Gleitlager 28 und über ein Wälzlager 29 in Gehäuseteilen drehgelagert.

Für die Betätigung der Drehantriebseinrichtung 7 ist primär ein zweiter andeutungsweise erkennbarer Antriebsmotor 31 vorgesehen. Dessen Rotorwelle 32 ist wiederum über ein Wälzlager 33 gehäuseseitig geführt und verfügt über eine Verzahnung 34. In der Antriebskette zwischen dem zweiten Antriebsmotor 31 und der Drehantriebseinrichtung 7 ist ein mit der Rotorwelle 32 kämmendes Zwischenzahnrad 35 vorgesehen. Letzteres sitzt drehfest auf einer Welle 36. Eine Feder 37 schafft die drehfeste Verbindung zwischen den beiden Teilen. Die Welle 36 ist gehäuseseitig über ein Gleitlager 38 und ein Wälzlager 39 drehgelagert. Eine Kegelverzahnung 41 an der Welle 36 kämmt mit der Kegelverzahnung 42 des Hohlrades 6.

Auf der Abtriebswelle 26 sitzt eine insgesamt mit 43 bezeichnete Freilaufkupplung. Diese besteht im wesentlichen aus symbolisch angedeuteten Kupplungsgliedern 44 herkömmlicher Bauart, die in nur einer Drehrichtung der Antriebswelle 26 die gleichsinnige Drehmitnahme eines Kupplungszahnrades 45 bewerkstelligen. Das Kupplungszahnrad 45 kämmt stets mit dem Zwischenzahnrad 35.

Der Handgriff 2 verfügt über einen Ein-/Aus-Schalter 48, durch dessen Betätigung das Gerät in Betrieb gesetzt werden kann. Ferner sind im Handgriff Steuerschalter zur voneinander unabhängigen Steuerung der Drehzahl der Antriebsmotoren 21, 31 vorgesehen, wobei der für den Antriebsmotor 21 vorgesehene Steuerschalter 49 ersichtlich ist. Durch Verschieben der Steuerschalter lassen sich entsprechend einem stationären Symbol 51 die jeweils geeigneten Drehzahlen der Antriebsmotoren 21, 31 einstellen.

Für nur drehenden Antrieb des Werkzeugs 4 wird der Antriebsmotor 31 in der geeigneten Drehzahl in Betrieb genommen. Die Drehbewegung wird von der Rotorwelle 32 über das Zwischenzahnrad 35 und die Welle 36 auf die Drehantriebseinrichtung 7 übertragen. Gleichzeitig dreht das Zwischenzahnrad 35 das Kupplungszahnrad 45 frei mit.

Zur Vermittlung von Drehung und Schlägen an das Werkzeug 4 werden beide Antriebsmotoren 21, 31 in Betrieb genommen. Der Kraftfluss ist hierbei so, dass die Abtriebswelle 26 vom Kupplungszahnrad 45 überholt werden kann. Die Drehzahl des Werkzeugs 4 kann demnach mit Hilfe des Antriebsmotors 31 über die Drehzahl hinaus, die der Antriebsmotor 21 bringt, erhöht werden. Ferner besteht die Möglichkeit, dass bei Abfall der Drehzahl des Antriebsmotors 31, beispielsweise zufolge erhöhten Drehmomentbedarfs, der Antriebsmotor 21 über die Freilaufkupplung 43 zur Unterstützung des Drehantriebes zuschaltet.

Für das ausschliessliche Übertragen von Schlägen auf das Werkzeug 4 wird nur der Antriebsmotor 21 - und zwar gegenüber den anderen Betriebsarten mit umgekehrter Drehrichtung - in Betrieb genommen, wodurch die Freilaufkupplung 43 eine Entkoppelung der Abtriebswelle 26 von der Antriebskette der Drehantriebseinrichtung 7 bewerkstelligt. Die Schlagleistung lässt sich durch Wählen der entsprechenden Spindeldrehzahl des Antriebsmotors 21 über den Steuerschalter 49 einstellen.

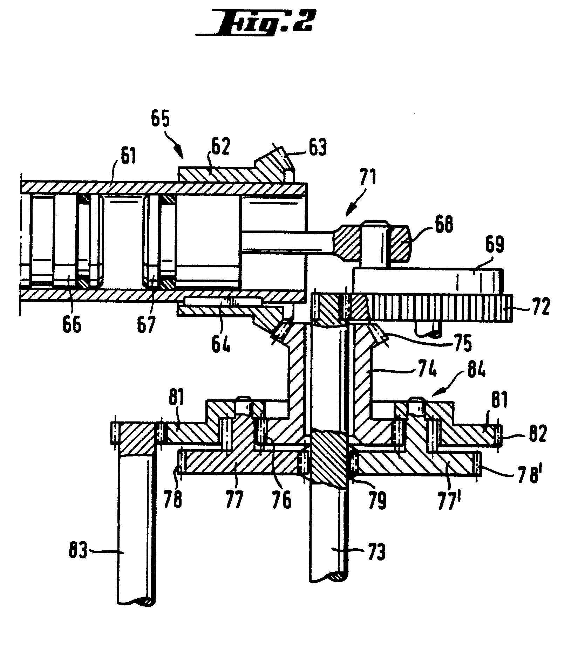

Die Fig. 2 zeigt wiederum einen Führungszylinder 61 mit einem Hohlrad 62, das eine Kegelverzahnung 63 aufweist. Durch eine Feder 64 ist das Hohlrad 62 mit dem Führungszylinder 61 drehfest verbunden. Der Führungszylinder 61 und das Hohlrad 62 sind wiederum Teile einer insgesamt mit 65 bezeichneten Drehantriebseinrichtung.

Analog der Ausführung nach Fig. 1 sind im Führungszylinder 61 ein Schlagkolben 66 und ein Treibkolben 67 verschiebbar gelagert. Am Treibkolben 67 greift ein Pleuel 68 an, der von einer Kurbel 69 in Bewegung versetzt wird. Schlagkolben 66, Treibkolben 67, Pleuel 68 und Kurbel 69 bilden zusammen ein insgesamt mit 71 bezeichnetes Schlagwerk.

Zum Antrieb der Kurbel 69 ist diese mit einem Zahnrad 72 verbunden. Letzteres kämmt mit der Verzahnung einer Rotorwelle 73 eines nicht näher dargestellten Antriebsmotors. Konzentrisch zur Rotorwelle 73 ist gegenüber dieser frei drehbar ein Treibrad 74 gelagert. Dieses steht über eine Kegelverzahnung 75 mit der Kegelverzahnung 63 des Hohlrades 62 in Eingriff. Das Treibrad 74 verfügt aber auch über eine Aussenverzahnung 76, mit der zwei einander diametral gegenüberliegende Planetenräder 77, 77' kämmen. Ein weiterer grösserer Zahnkranz 78, 78' oder Planetenräder 77, 77' kämmt mit einer Verzahnung 79 an der Rotorwelle 73. Die Planetenräder 77, 77' sind in einem Stützrad 81 drehgelagert. Das Stützrad 81 seinerseits ist um die Achse der Rotorwelle 73 drehbar. Über eine Aussenverzahnung 82 steht das Stützrad 81 in Eingriff mit der Rotorwelle 83 eines zweiten, nicht näher dargestellten Antriebsmotors.

Die Planetenräder 77, 77' bilden zusammen mit dem Treibrad 74 und dem Stützrad 81 ein insgesamt mit 84 bezeichnetes Umlaufgetriebe, das als Kupplungseinrichtung zwischen den Antriebsketten für die Drehantriebseinrichtung 65 und das Schlagwerk 71 dient. Durch Betrieb der beiden Antriebsmotoren bei verschiedenen Drehzahlen lassen sich die letztlich an ein Werkzeug abzugebende Drehzahl sowie Schlagleistung beliebig steuern.

Über die Rotorwelle 73 wird das Schlagwerk 71 angetrieben. Durch geringfügiges Verändern der Drehzahl der Rotorwelle 73 ändert sich die Schlagleistung um ein Mehrfaches. Das Drehen der Rotorwelle 73 bewirkt über die Planetenräder 77, 77' und das Treibrad 74 gleichzeitig das Betätigen der Drehantriebseinrichtung 65. Durch Zuschalten des zweiten Antriebsmotors wird über die Rotorwelle 83 das Stützrad 81 und damit auch das Treibrad 74 angetrieben. Die beiden auf das Treibrad 74 von den beiden Antriebsmotoren eingeleiteten Drehbewegungen addieren bzw subtrahieren sich - je nach Drehrichtung der Rotorwellen 73, 83. Auf diese Weise ist für das Werkzeug jede beliebige Drehzahl zwischen zwei Grenzwerten einstellbar.

## Patentansprüche

1. Bohrhammer, bei welchem mittels eines Schlagwerkes und einer Drehantriebseinrichtung einem Werkzeug wahlweise Drehung, Schläge oder Drehung und Schläge erteilt werden, mit zwei unabhangig voneinander steuerbaren Antriebsmotoren (21, 31), von denen der erste (21) dem Schlagwerk und der zweite (31) mit der Drehantriebseinrichtung gekuppelt ist, dadurch gekennzeichnet, dass zwischen der den ersten Antriebsmotor (21) mit dem Schlagwerk (8, 71) verbindenden Antriebskette und der den zweiten Antriebsmotor (31) mit der Drehantriebseinrichtung (7, 65) verbindenden Antriebskette eine einen Kraftfluss von der einen zur anderen Antriebskette erlaubende Kupplungseinrichtung (43, 84) vorgesehen ist.

2. Bohrhammer nach Anspruch 1, dadurch gekennzeichnet, dass die Kupplungseinrichtung als Umlaufgetriebe (84) ausgebildet ist.

3. Bohrhammer nach Anspruch 1, dadurch gekennzeichnet, dass die Kupplungseinrichtung als Freilaufkupplung (43) ausgebildet ist.

4. Bohrhammer nach Anspruch 3, dadurch gekennzeichnet, dass die Freilaufkupplung (43) auf einer Abtriebswelle (26) der mit dem ersten Antriebsmotor (21) verbundenen Antriebskette sitzt.

5. Bohrhammer nach Anspruch 3 oder 4, dadurch gekennzeichnet, dass die Freilaufkupplung (43) ein Kupplungszahnrad (45) aufweist, das mit einem Zwischenzahnrad (35) in der Antriebskette zwischen dem zweiten Antriebsmotor (31) und der Drehantriebseinrichtung (7) kämmt.

## Claims

1. A hammer drill, in which by means of a percussion mechanism and a rotary drive mechanism optionally rotation, or impacts, or rotation and impacts are imparted to a tool, comprising two driving motors (21, 31) which are controllable independently of one another and of which the first (21) is coupled with the percussion mechanism and the second (31) is coupled with the rotary drive mechanism, characterised in that provided between the driving chain connecting the first driving motor (21) to the percussion mechanism (8, 71) and the driving chain connecting the second driving motor (31) to the rotary drive mechanism (7, 65) is a clutch mechanism (43, 84) which allows a flow of power from the one driving chain to the other.

2. A hammer drill according to claim 1, characterised in that the clutch mechanism is designed as a planetary gear (84).

3. A hammer drill according to claim 1, characterised in that the clutch mechanism is designed as a freewheel clutch (43)

4. A hammer drill according to claim 3, characterised in that the freewheel clutch (43) is seated on a power-take-off shaft (26) of the driving chain connected to the first driving motor (21).

5. A hammer drill according to claim 3 or 4, characterised in that the freewheel clutch (43) has a toothed clutch wheel (45) which meshes with a toothed intermediate wheel (35) in the driving chain between the second driving motor (31) and the rotary drive mechanism (7).

## Revendications

1. Marteau perforateur qui, au moyen d'un mécanisme de percussion et d'un mécanisme d'entraînement en rotation, permet de transmettre à un outil, au choix, un mouvement de rotation, des coups ou un mouvement de rotation et des coups, avec deux moteurs d'entraînement (21, 31) pouvant être commandés indépendamment l'un de l'autre et dont le premier (21) est couplé avec le mécanisme de percussion et le second (31) avec le mécanisme d'entraînement en rotation, caractérisé en ce qu'entre la chaîne d'entraînement qui relie le premier moteur d'entraînement (21) au mécanisme de percussion (8, 71) et la deuxième chaîne d'entraînement qui relie le second moteur d'entraînement (31) au système de mise en rotation (7, 65), il est prévu un dispositif d'accouplement (43, 84) qui permet une transmission de force de l'une à l'autre desdites chaînes d'entraînement.

2. Marteau perforateur selon la revendication 1, caractérisé en ce que le dispositif d'accouplement est conformé en engrenage planétaire (84).

3. Marteau perforateur selon la revendication 1, caractérisé en ce que le dispositif d'accouplement est conformé en accouplement à roue libre (43)

4. Marteau perforateur selon la revendication 3, caractérisé en ce que l'accouplement à roue libre (43) est monté sur un arbre de sortie (26) de la chaîne d'entraînement reliée au premier moteur d'entraînement (21)

5. Marteau perforateur selon l'une des revendications 3 ou 4, caractérisé en ce que l'accouplement à roue libre (43) comprend une roue dentée d'accouplement (45) qui engrène avec une roue dentée intermédiaire (35) dans la chaîne d'entraînement entre le second moteur d'entraînement (31) et le système de mise en rotation (7).

Fig. 1

Fig.2